# EUROPEAN PATENT APPLICATION

(11) **EP 4 681 526 A1**
(43) Date of publication of application: **21.01.2026**
(21) Application number: 25188133.0
(22) Date of filing: 08.07.2025
(51) Int. Cl.: A01G 3/053, A01D 34/416, A01D 34/82, A01D 34/90, A01G 3/06, B25F 5/02

(54) **WORKING MACHINE**

(30) Priority: 18.07.2024 JP 2024114444
(71) Applicant: Yamabiko Corporation, Ohme-shi, Tokyo 198-8760 (JP)
(72) Inventor: SASAKI, Takao, Ohme-shi, Tokyo, 1988760 (JP); MOMIYAMA, Hiroshi, Ohme-shi, Tokyo, 1988760 (JP); TATSUNO, Kouki, Ohme-shi, Tokyo, 1988760 (JP); TANABE, Akira, Ohme-shi, Tokyo, 1988760 (JP); NISHIYA, Fujimaru, Ohme-shi, Tokyo, 1988760 (JP)
(74) Representative: Winter, Brandl - Partnerschaft mbB

(57) **Abstract**

According to an aspect of the present disclosure, there is provided a working machine including: a working portion; a main body portion; a connecting portion; and an operation portion, the working portion being connected to the main body portion via the connecting portion, the operation portion including a handle, and a fixing mechanism that fixes the handle to the connecting portion, and the handle including a marker that indicates a position and an angle relative to the connecting portion.

## Description

### BACKGROUND

The present disclosure related to a working machine.

### RELATED ART

Japanese unexamined patent publication No. 2015-050985 and Japanese examined utility model application publication No. H01-32511 disclose portable working machines each including a U-shaped handle with grips on both sides.

In the portable working machine described in Japanese examined utility model application publication No. H01-32511, a configuration is disclosed in which the U-shaped handle is tightened and fixed to a main body control rod. According to this configuration, the operator can fix the handle in a desired position.

### SUMMARY

However, in the portable working machines disclosed in Japanese unexamined patent publication No. 2015-050985 and Japanese examined utility model application publication No. H01-32511, when the position or angle of the handle is changed in storing or transporting the working machine and the like, it is difficult to return the handle to the same position again.

In view of the above circumstances, the present disclosure provides a working machine in which the position and the angle of a handle can be repeatedly returned to the original state.

According to an aspect of the present disclosure, there is provided a working machine including: a working portion; a main body portion; a connecting portion; and an operation portion, the working portion being connected to the main body portion via the connecting portion, the operation portion including a handle, and a fixing mechanism that fixes the handle to the connecting portion, and the handle including a marker that indicates a position and an angle relative to the connecting portion.

According to such an aspect, the position and the angle of the handle can be repeatedly returned to the original state.

### BRIEF DESCRIPTION OF DRAWINGS

FIG. 1 is a perspective view of a brush cutter as viewed from above.
FIG. 2 is an overall view of the brush cutter as viewed from above.
FIG. 3 is a perspective view of a fixing mechanism as viewed from above.
FIG. 4 is an enlarged perspective view of a handle shown in an area A in FIG. 1 as viewed from above.
FIG. 5 is a diagram for explaining markers provided on the handle.
FIG. 6 is a perspective view of the brush cutter as viewed from above, showing adjustment directions in which the position and the angle of the handle are adjusted.
FIG. 7A to FIG. 7C are enlarged perspective views each showing a positional relationship between a fixing mechanism and the handle, for explaining a position adjustment of the handle.
FIG. 8A to FIG. 8C are enlarged perspective views each showing a positional relationship between the fixing mechanism and the handle, for explaining an angle adjustment of the handle.
FIG. 9 is a perspective view of the brush cutter with the handle retracted, as viewed from above.

### DETAILED DESCRIPTION

Hereinafter, an example of an embodiment of the present disclosure will be described with reference to the drawings. Various features described below in the following embodiment can be combined with each other.

### 1. Overall configuration

Chapter 1 describes a working machine 1 according to one embodiment.

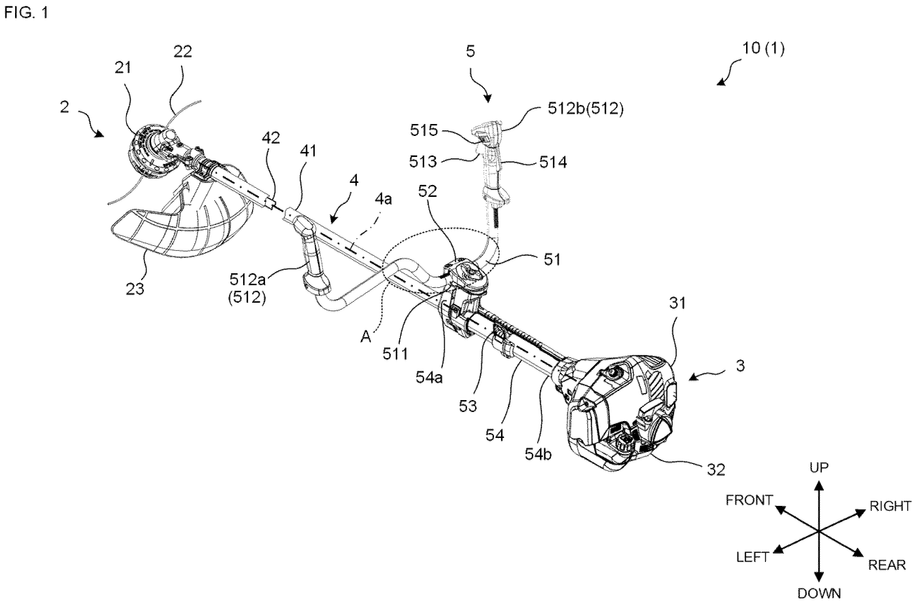

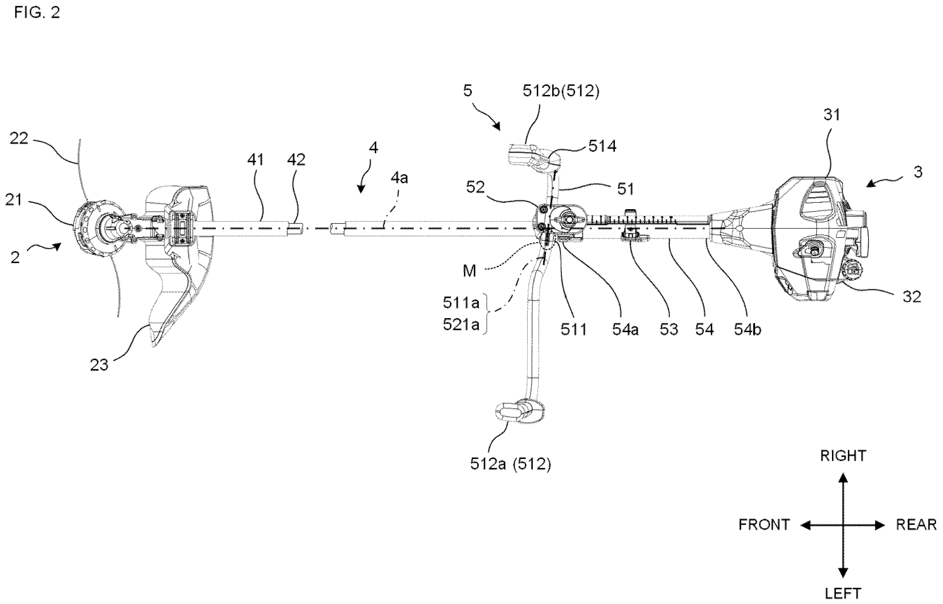

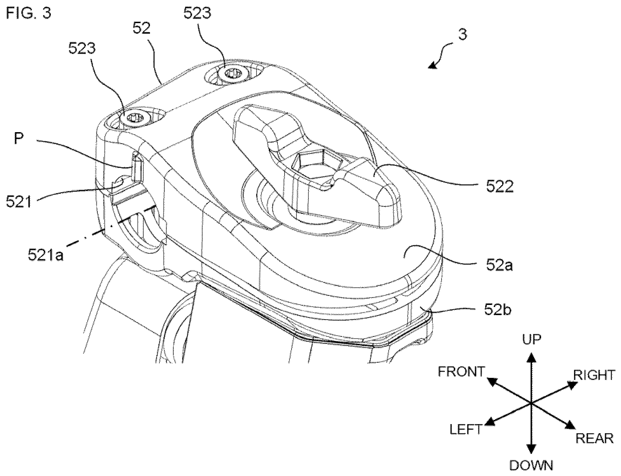

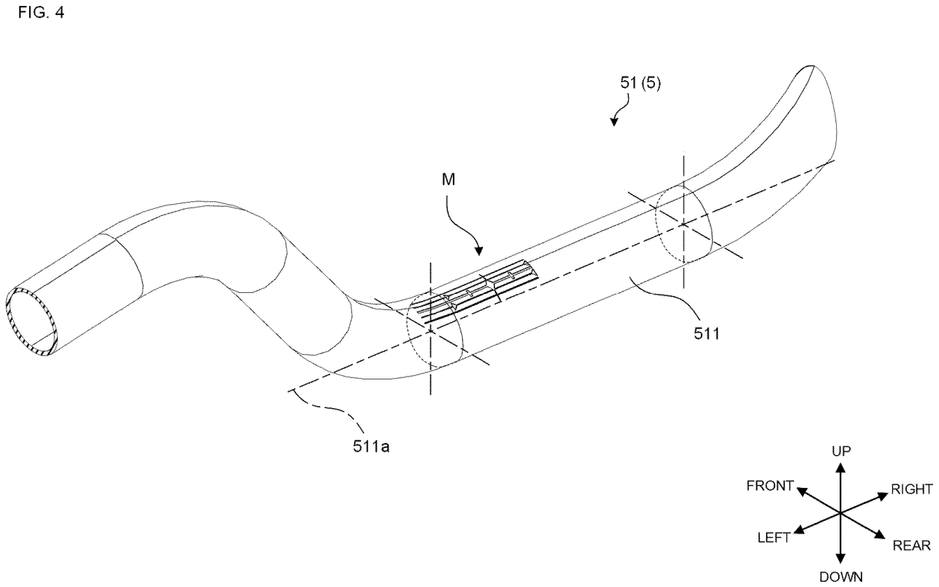

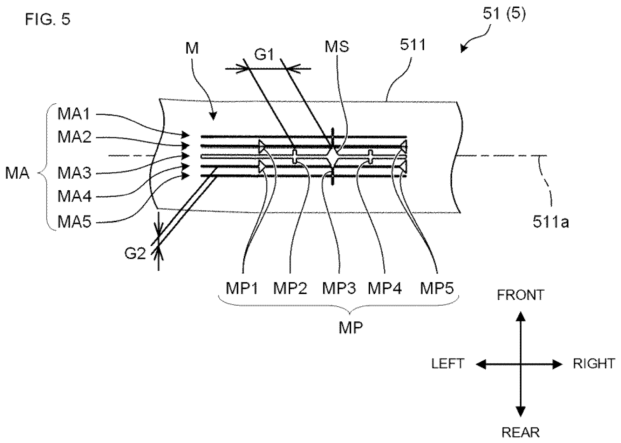

FIG. 1 is a perspective view of a brush cutter as viewed from above. FIG. 2 is an overall view of the brush cutter as viewed from above. FIG. 3 is a perspective view of a fixing mechanism as viewed from above. FIG. 4 is an enlarged perspective view of a handle shown in an area A in FIG. 1 as viewed from above. FIG. 5 is a diagram for explaining markers provided on the handle.

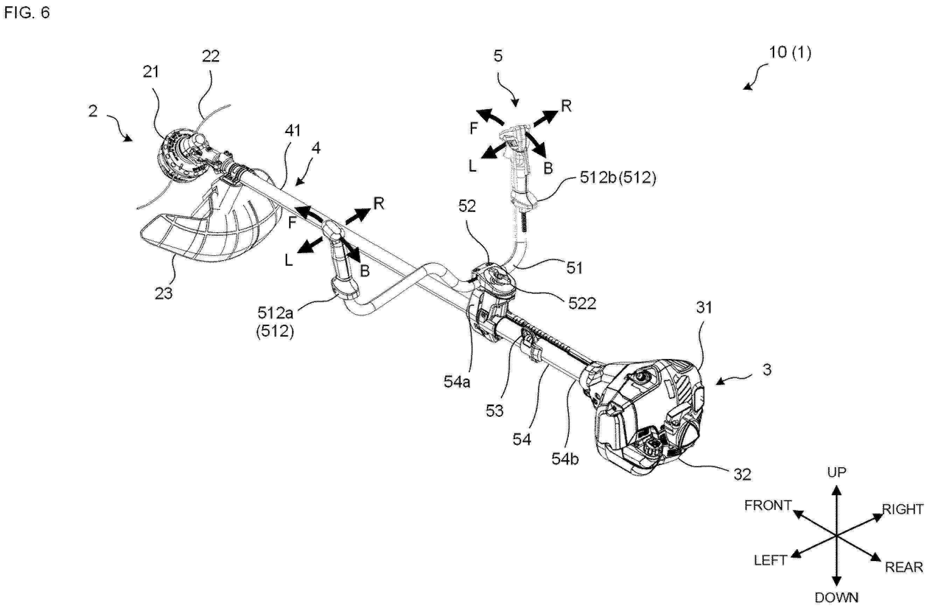

In the following description, directions of a brush cutter 10 and each component configuring and the brush cutter 10 are defined based on "up", "down", "left", "right", "front" and "rear" shown in FIG 1 to FIG. 5 (as well as FIG. 6 to FIG. 9). Furthermore, in the following description, "up" is also referred to as an "upper side" or "upper", and "down" is also referred to as a "lower side" or "lower". Moreover, the direction formed by "up" and "down" is referred to as "up and down" or an "up-down direction. The same applies to "left", "right", "front" and "rear".

### (Working machine 1)

The working machine 1 shown in FIG. 1 is a portable brush cutter 10. The brush cutter 10 that is the working machine 1 includes a working portion 2, a main body portion 3, a connecting portion 4, and an operation portion 5. The brush cutter 10 is a shoulder band type brush cutter that adopts an engine as a power source. Although the brush cutter 10 is given as an example of the working machine 1, the working machine 1 can be applied to various machines in which the working portion 2 and the main body portion 3 are connected by the connecting portion 4. As other machines, for example, a blower, an edger, a pruner, a cultivator, a sweeper, a shaft hedge trimmer, or the like can be exemplified. The power source of the working machine 1 is not limited to an engine, and a motor or the like may be adopted. Furthermore, the aspect of the working machine 1 is not limited to the shoulder band type, but can also be a hand-held type, a backpack type, or the like.

### (Working portion 2)

As shown in FIG. 1, the working portion 2 is configured to be connected to the connecting portion 4, at the front of the main body portion 3 and the connecting portion 4. The working portion 2 includes a rotary portion 21, a nylon cord 22, and a cover 23.

The rotary portion 21 has a substantially disk-like shape, and is configured to rotate by the rotational power of the power source 32. The nylon cord 22 has a linear shape. The nylon cord 22 has its base end side wrapped around the rotary portion 21 in the circumferential direction and fixed inside the rotary portion 21. Also, the tip side of the nylon cord 22 extends from the rotary portion 21 to the outer periphery so as to protrude outward from the rotary portion 21. The nylon cord 22 is configured to be able to cut grass or the like when the nylon cord 22 comes into contact with the grass or the like by being rotated at a high speed together with the rotary portion 21. The cover 23 has a fan-like shape and is connected to the connecting portion 4 behind the nylon cord 22. The cover 23 is configured to prevent pieces of grass or the like from flying directly toward an operator when the grass or the like is cut by the nylon cord 22. Although an example has been described in which the nylon cord 22 is adopted for the working portion 2, this is not limited thereto. For example, a resin cord other than a nylon cord, a metal blade (such as a tipped saw or a shredder blade), a reciprocating blade, or the like may also be adopted.

### (Main body portion 3)

As shown in FIG. 1, the working portion 2 is connected to the main body portion 3 via the connecting portion 4. The main body portion 3 includes a casing 31 and a power source 32.

The casing 31 has a box-like shape and is connected to the connecting portion 4 at the rear side of the connecting portion 4. The casing 31 has a space therein and houses the power source 32 in that space.

The power source 32 is configured to generate rotational power. The rotational power generated by the power source 32 is transmitted to the rotary portion 21 of the working portion 2 via a drive transmission shaft 42 inside the connecting portion 4. Specifically, the power source 32 is a known engine, and is housed in the internal space of the casing 31. The engine may be set to any specifications (displacement, fuel tank size, etc.), taking into consideration the weight, operability, operational continuity and the like of the brush cutter 10. Details of the drive transmission shaft 42 of the connecting portion 4 will be described later.

### (Connecting portion 4)

As shown in FIG. 1, the main body portion 3 and the working portion 2 are connected via the connecting portion 4. The connecting portion 4 is configured so that an axis 4a thereof extends in the front-rear direction, and includes an operation rod 41 and a drive transmission shaft 42. The operation rod 41 is a pipe-shaped member extending in the front-rear direction, through which the drive transmission shaft 42 is inserted. The drive transmission shaft 42 connects the rotary portion 21 of the working portion 2 to the power source 32, and is configured to be able to transmit power from the power source 32 to the working portion 2.

### (Operation portion 5)

As shown in FIG. 1, the operation portion 5 is attached to the connecting portion 4. The operation portion 5 includes a handle 51, a fixing mechanism 52 that fixes the handle 51 to the connecting portion 4, a band attaching portion 53, and a shroud 54.

As shown in FIG. 1, the handle 51 has a substantially U-shape and is configured to be fixable to the fixing mechanism 52. The handle 51 is fixed to the rear side of the connecting portion 4 by the fixing mechanism 52. The handle 51 is also a portion that is held and operated by the operator's hand, and includes an extending portion 511, grips 512, a trigger lever 513, a lockout lever 514, and a main switch 515.

The extending portion 511 extends in a first direction that intersects with the axis 4a of the connecting portion 4 which extends front and back, with the fixing mechanism 52 as its center. In other words, the first direction is a direction that intersects with the connecting portion 4 and also intersects with the front-rear direction. As shown in FIG. 3 and FIG. 4, specifically, the extending portion 511 has an axis 511a extending in the left-right direction as the first direction, and is connected to the fixing mechanism 52 so that the axis 511a is approximately coincides with a longitudinal axis 521a of a shaft hole 521 provided in the fixing mechanism 52. That is, the handle 51 is configured so that the axis 511a thereof extends in the left-right direction (an example of the first direction).

In addition, the extending portion 511 is bent so that an operator can easily hold the grip 512. Specifically, the extending portion 511 extending to the left side from the fixing mechanism 52 extends from the fixing mechanism 52 substantially horizontally in the left direction for a predetermined length, then curves and extends diagonally upward, extends substantially horizontally in the left direction, then curves sharply and extends upward. On the other hand, the extending portion 511 extending to the right side from the fixing mechanism 52 extends from the fixing mechanism 52 substantially horizontally in the right direction for a predetermined length, and then curves and extends upward. The extending portion 511 also includes a grip 512a at the left end portion and a grip 512b at the right end portion as the grips 512 that are directly held by the operator. The grip 512b is configured to be larger than the grip 512a, and is provided with the trigger lever 513, the lockout lever 514, and the main switch 515.

The trigger lever 513 is arranged on the front side of the grip 512b, and is configured as an operation means for increasing or decreasing the rotational speed of the rotary portion 21 and the nylon cord 22. In other words, the trigger lever 513 is configured to control the operation of the working portion 2 via a drive switch (not shown). The operator can operate the trigger lever 513 while holding the grip 512b.

The lockout lever 514 is arranged on the rear side of the grip 512b, and is configured to be displaceable relative to the trigger lever 513. Specifically, the lockout lever 514 is arranged so as to be freely retractable relative to the grip 512b. When the operator holds the grip 512b, the lockout lever 514 is pushed by the palm of the operator and is retracted into the grip 512b. In this manner, the lockout lever 514 and the trigger lever 513 are operatively connected within the grip 512b so that the trigger lever 513 can be operated only after the lockout lever 514 has been operated first.

The main switch 515 is arranged on the left side of the grip 512b, and is configured to be able to switch the power source 32 on and off. Specifically, when the main switch 515 is on, the engine which is the power source 32 is configured to start, and furthermore, the state of the started engine is configured to be maintained. In addition, when the main switch 515 is off, the started engine is stopped or the engine cannot be started.

Furthermore, as shown in FIG. 2, the handle 51 is provided with a marker M on the upper surface side of the extending portion 511 of the handle 51, near the position where the fixing mechanism 52 is attached. This allows a pointer P provided on the fixing mechanism 52 to indicate any position of the marker M. The pointer P indicates any position of the marker M, thereby indicating the relative position and angle of the handle 51 to the connecting portion 4 via the fixing mechanism 52. In other words, the handle 51 includes a marker M that indicates the relative position and angle to the connecting portion 4 via the fixing mechanism 52. According to such an aspect, the marker M indicates the position and the angle of the handle 51 relative to the connecting portion 4, so that when the position or the angle of the handle 51 is changed in housing, transporting the brush cutter 10 or the like, the position and the angle of the handle 51 can be repeatedly returned to the original state. In other words, the relative position and angle of the handle 51 to the connecting portion 4 can be defined by performing accurate positioning relative to the fixing mechanism 52. Furthermore, according to such an aspect, the position and the angle of the handle 51 can be accurately adjusted in a short time to a position and an angle that are easy for the operator to use the brush cutter 10 depending on the operator's preference. That is, for example, when returning the handle to a desired position and angle, it was difficult to reproduce the position and the angle with a handle having a substantially uniform outer surface with no marker M. In contrast, the handle 51 including the marker M makes it possible to return the handle 51 to its original state accurately in a short time. As a result, the operator can always use the brush cutter 10 with the handle 51 being in the position and the angle that provide good operability. It should be noted that details of the pointer P provided on the fixing mechanism 52 will be described later.

More specifically, as shown in FIG. 2, the marker M is configured to be positioned on the left side of the fixing mechanism 52. In other words, when viewing from the rear side, the handle 51 has the marker M on the left side of the axis 4a of the connecting portion 4. According to such an aspect, the position of the operator relative to the brush cutter 10 when placing the brush cutter 10 on the ground and adjusting the position and the angle of the handle 51, and the position of the operator relative to the brush cutter 10 when lifting the brush cutter 10 can be on the same side. As a result, after adjusting the position and the angle of the handle 51, the operator can lift the brush cutter 10 without changing his/her position relative to the brush cutter 10, allowing the operator to start work smoothly.

Furthermore, as shown in FIG. 5, the marker M may include a plurality of position markers (unit markers) MP1 to MP5 and a plurality of angle markers (unit markers) MA1 to MA5. In this case, the position markers MP1 to MP5 are configured to indicate the position of the handle 51 in the left-right direction (an example of the first direction) relative to the connecting portion 4. Furthermore, the angle markers MA1 to MA5 are configured to indicate the position in the rotational direction about the axis 511a relative to the connecting portion 4. According to such an aspect, the position and the angle of the handle 51 can be indicated by each of the position markers MP1 to MP5 (position markers MP) and the angle markers MA1 to MA5 (angle markers MA). As a result, the position and the angle of the handle 51 can be easily adjusted in a shorter time to a position and an angle that are easy for the operator to use the brush cutter 10. Hereinafter, the position markers MP1 to MP5 will first be described in detail, and then the angle markers MA1 to MA5 will be described in detail.

The position markers MP1 to MP5 are arranged along the left-right direction of the handle 51 to indicate the position of the handle 51 in the left-right direction (see FIG. 5). Specifically, the position marker MP1, the position marker MP2, the position marker MP3, the position marker MP4, and the position marker MP5 are arranged in order from the left side of the handle 51. The number of position markers MP is not limited to five, but it is preferable to provide approximately three to eight markers. In this case, the position markers MP are placed at appropriate intervals so that the operator can distinguish the markers, improving reproducibility. When applied to a smaller grass mower or the like, the number of position markers MP may be less than three, and the left and right ends of the angle marker MA described below may be substituted for the two position markers MP.

It is preferable that at least some of the position markers MP1 to MP5 are configured to indicate the directions in which the handle 51 can be displaced (slid). Specifically, as shown in FIG. 5, the position marker MP1 positioned on the leftmost side of the handle 51 is configured to indicate the right direction from the position of the position marker MP1 as a direction in which the handle 51 is displaceable. In more detail, the position marker MP1 which is shown with the tip of an arrow pointing to the right direction indicates that the direction in which the handle 51 is displaceable is the right direction from the position of the position marker MP1. The position marker MP1 may also be configured to indicate the left-side boundary that is recommended as a fixed position for the handle 51. According to such an aspect, the operator can refer to the position marker MP1 as the recommended range that takes into account the left-right balance of the brush cutter 10.

The position marker MP5 positioned on the rightmost side of the handle 51 is configured to indicate the left direction from the position of the position marker MP5 as a direction in which the handle 51 is displaceable. In more detail, the position marker MP5 which is shown with the tip of an arrow pointing to the left direction indicates that the direction in which the handle 51 is displaceable is the left direction from the position of the position marker MP5. The position marker MP5 may also be configured to indicate the right-side boundary that is recommended as a fixed position for the handle 51. According to such an aspect, the operator can refer to the position marker MP5 as the recommended range that takes into account the left-right balance of the brush cutter 10.

Furthermore, the position marker MP3 that is positioned midway between the position marker MP1 and the position marker MP5 is configured to indicate the left-right direction from the position of the position marker MP3 as a direction in which the handle 51 is displaceable. In more detail, the position marker MP3 which is shown in a shape combining the right direction of the tip of the arrow with the left direction of the tip of the arrow, i.e., a diamond shape, indicates that the direction in which the handle 51 is displaceable can be either the right direction or the left direction from the position of the position marker MP3. The position markers MP2 and MP4, which are positioned between the position markers MP1 and MP3, or the position markers MP3 and MP5, respectively, are intermediate positions and are configured to indicate their positions without indicating a direction.

As explained above, the marker M includes a plurality of position markers (unit markers) MP1 to MP5. Also, at least some of the plurality of position markers MP1 to MP5 are configured to indicate the directions in which the handle 51 is displaceable. According to such an aspect, the directions in which the handle 51 is displaceable are indicated by the arrangement and the shape of the plurality of position markers MP1 to MP5, making it possible to easily understand the adjustment direction or the adjustment width. As a result, the position of the handle 51 can be easily adjusted in a shorter time.

In addition, the position markers MP1 to MP5 are arranged at a predetermined interval G1 from each other. The predetermined interval G1 shown in FIG. 5 is 8.5 mm. In other words, a plurality of position markers MP1 to MP5 is arranged at a predetermined interval G1. The predetermined interval G1 may be, for example, 3 to 20 mm, preferably 5 to 15 mm, more preferably 7 to 10 mm. According to such an aspect, the position of the handle 51 relative to the main body portion 3 can be finely adjusted in accordance with the predetermined interval G1 by arranging the plurality of position markers MP1 to MP5 at the predetermined interval G1. As a result, the position of the handle 51 can be easily adjusted in an even shorter time.

On the other hand, the angle markers MA1 to MA5 are arranged on the upper surface side of the handle along the axial direction (circumferential direction) of the handle 51 so as to indicate the position in the rotational direction about the axis 511a of the handle 51 (see FIG. 5). Specifically, the angle marker MA1, the angle marker MA2, the angle marker MA3, the angle marker MA4, and the angle marker MA5 are arranged in order from the front along the circumferential direction of the handle 51. The number of angle markers MA is not limited to five, but it is preferable to provide approximately three to eight angle markers. In this case, the angle markers MA are placed at appropriate intervals, thereby improving reproducibility. The interval between the angle markers MA is determined by considering the outer diameter of the pipe of the handle 51, a position, an area and the like that are easily visually recognized by the operator. The line width of the angle marker MA may be uniform, but making only the central angle marker MA thicker improves visibility of the standard angle. Specifically, the angle markers MA shown in FIG. 5 are shown with a line width of 0.75 mm for the central angle marker MA3, and a line width of 0.30 mm for the other angle markers MA. According to such an aspect, the reference angle, i.e., the angle marker MA3, can be more clearly indicated.

The angle marker MA1 and the angle marker MA5 among the angle markers MA1 to MA5 may be configured to indicate the direction in which the handle 51 can be displaced (rotated). Specifically, the angle marker MA1 may be configured to indicate the rear direction from the position of the angle marker MA1, and the angle marker MA5 may be configured to indicate the front direction from the position of the angle marker MA5. In other words, the angle marker MA1 and the angle marker MA5 are preferably configured to indicate boundaries in the rear direction and the front direction, respectively, that are recommended as fixing positions of the handle 51. According to such an aspect, the operator can refer to the angle marker MA1 and the angle marker MA5 as the recommended range that takes into consideration the front-rear balance of the brush cutter 10. As explained above, the marker M includes a plurality of angle markers (unit markers) MA1 to MA5. At least some of the plurality of angle markers MA1 to MA5 are configured to indicate the directions in which the handle 51 is displaceable. According to such an aspect, the directions in which the handle 51 is displaceable are indicated by the arrangement and the shape of the plurality of angle markers MA1 to MA5, making it possible to easily understand the adjustment direction or the adjustment width. As a result, the position of the handle 51 can be easily adjusted in a shorter time to improve the operability of the brush cutter 10.

In addition, the angle markers MA1 to MA5 are arranged at a predetermined interval G2 from each other. In other words, a plurality of angle markers MA1 to MA5 is arranged at a predetermined interval G2. The predetermined interval G2 is configured to correspond to a predetermined angle θ when the extending portion 511 rotates about the axis 511a, and is defined according to the outer diameter of the extending portion 511 on which the angle markers MA are marked. In the predetermined interval G2 shown in FIG. 5, the predetermined angle θ is 10°. Furthermore, the predetermined angle θ may be, for example, 3 to 20°, preferably 5 to 15°, more preferably 7 to 12°. According to such an aspect, the angle of the handle 51 relative to the main body portion 3 can be finely adjusted using the predetermined angle θ as a guide by arranging the plurality of angle markers MA1 to MA5 at the predetermined interval G2. Setting the angle marker MA in the range described above increases the reproducibility of the predetermined position and makes it easier to adjust the angle of the handle 51 in an even shorter time.

In addition, the marker M may include a standard marker MS. As shown in FIG. 5, specifically, the standard marker MS may be indicated at a position where the position marker MP3 and the angle marker MA3 intersect. Consequently, the standard marker MS indicates a substantially central position in the position markers MP and a substantially central position in the angle markers MA. In other words, the standard marker MS is configured to indicate a standard position of the handle 51 relative to the main body portion 3. According to such an aspect, the standard position and angle of the handle 51 can be visually recognized by the marker M. As a result, the position and the angle of the handle 51 can be adjusted to a position and an angle that are easy for the operator to use the brush cutter 10, based on the standard position and angle. The standard position and angle should preferably be defined based on an adult who is assumed to be the operator.

As shown in FIG. 1, the fixing mechanism 52 is attached to the connecting portion 4 via the shroud 54 and is arranged between the working portion 2 and the main body portion 3. The fixing mechanism 52 may be attached to the connecting portion 4 not via the shroud 54.

As shown in FIG. 3, the fixing mechanism 52 includes an upper member 52a and a lower member 52b that are divided from each other in the up-down direction. The upper member 52a and the lower member 52b are fixed by a tightening member 522 and two screws 523. Specifically, the shaft portion of the tightening member 522 is inserted into through holes provided in the upper member 52a and the lower member 52b, respectively, and is screwed into a screw hole provided in the shroud 54. This fixes the fixing mechanism 52 to the connecting portion 4 via the shroud 54. The shaft portion of each of the screws 523 is inserted into a through hole provided in the upper member 52a, and is screwed into a screw hole provided in the lower member 52b.

In the fixing mechanism 52, a shaft hole 521 is formed by combining the upper member 52a and the lower member 52b. The shaft hole 521 is formed so as to allow the handle 51 to be inserted along the axis 521a thereof. The shaft hole 521 is configured so as to allow the inner diameter thereof to be adjusted by adjusting the tightening of the tightening member 522 and the two screws 523. As a result, the fixing mechanism 52 is configured to fix the handle 51 inserted into the shaft hole 521 with the inner diameter of the shaft hole 521 being narrow (reduced diameter state), and to release the fixation of the handle 51 with the inner diameter of the shaft hole 521 being wide (expanded diameter state). The fixing mechanism 52 is also configured to allow the handle 51 to move within the shaft hole 521 with the fixation of the handle 51 released.

Furthermore, the fixing mechanism 52 is configured so as to allow the fixation of the handle 51 to be released by loosening the tightening member 522 with the two screws 523 tightened at predetermined positions, whereas the handle 51 can be fixed by tightening the tightening member 522. The tightening member 522 is configured so as to be tightened or loosened by holding its upper portion and rotating it without using a tool.

Furthermore, the fixing mechanism 52 includes a pointer P in the vicinity of the shaft hole 521. Specifically, as shown in FIG. 3, the fixing mechanism 52 includes a pointer P above the axis 521a of the shaft hole 521 on the left side surface of the upper member 52a. Furthermore, the pointer P is configured so as to protrude from the left side surface of the upper member 52a along the left direction. According to such an aspect, the pointer P can be easily visually recognized even when the operator views the pointer P from an angle close to directly above the pointer. As a result, work for matching the angle marker MA with the pointer P can be facilitated.

The band attaching portion 53 is attached to the shroud 54 and is arranged between the main body portion 3 and the fixing mechanism 52. The band attaching portion 53 is configured to allow the position thereof in the front-rear direction and the circumferential direction relative to the shroud 54 to be adjusted. The band attaching portion 53 is also configured so that a hook provided in a shoulder band (not shown) can be attached thereto. The operator can lift the brush cutter 10 via the shoulder band by wearing the shoulder band and attaching the hook of the shoulder band to the band attaching portion 53. Furthermore, the operator can lift the brush cutter 10 at a position that is easy for the operator to work by adjusting the relative position of the band attaching portion 53 to the shroud 54 in the front-rear direction and the circumferential direction.

The shroud 54 is a pipe-shaped member extending in the front-rear direction, through which the connecting portion 4 inserted. In other words, the shroud 54 is arranged so as to cover the connecting portion 4. The shroud 54 has a front end 54a on the front side and a rear end 54b on the rear side. The front end 54a has a box-like shape and protrudes upward from the connecting portion 4. The fixing mechanism 52 is provided on the upper surface of the front end 54a. The rear end 54b is connected to the main body portion 3. It is preferable to provide vibration-proof members (not shown) between the shroud 54 and the main body portion 3, and between the shroud 54 and the connecting portion 4. This makes it possible to reduce vibrations from the main body portion 3 and the connecting portion 4.

### 2. Method for adjusting position and angle of handle 51

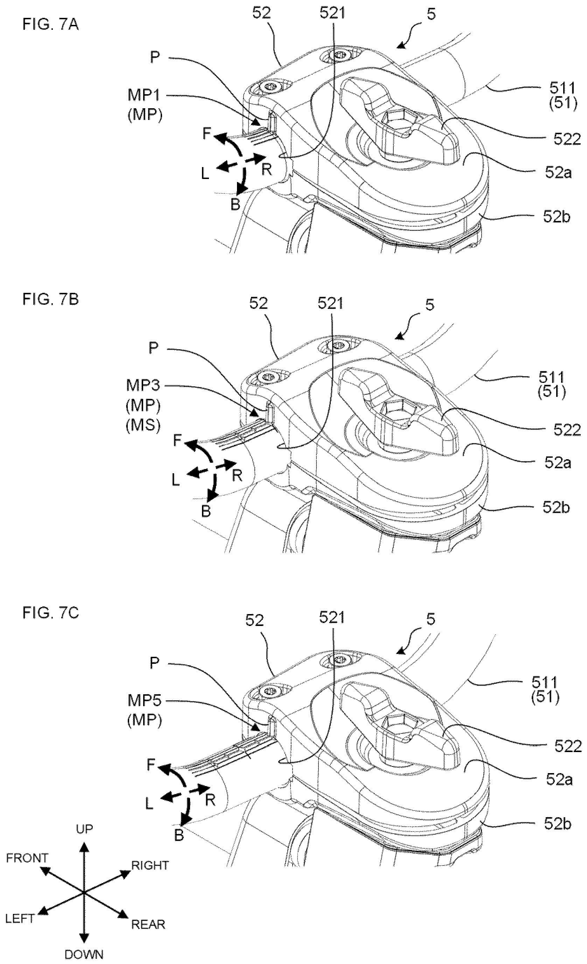

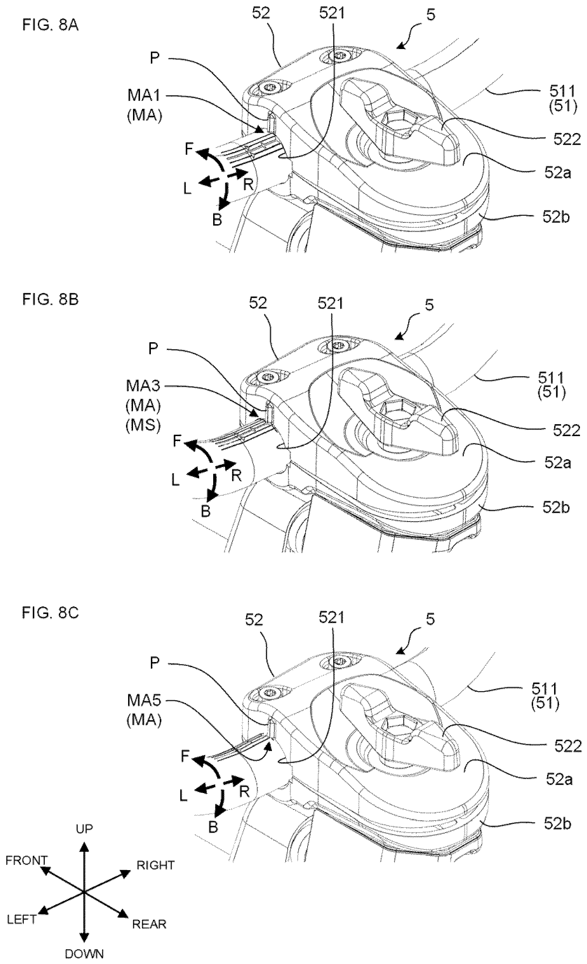

Next, a method for adjusting the position and the angle of the handle 51 in the brush cutter 10 will be described with reference to other figures. FIG. 6 is a perspective view of the brush cutter as viewed from above, showing adjustment directions in which the position and the angle of the handle are adjusted. FIG. 7A to FIG. 7C are enlarged perspective views each showing a positional relationship between the fixing mechanism and the handle, for explaining a position adjustment of the handle. FIG. 8A to FIG. 8C are enlarged perspective views each showing a positional relationship between the fixing mechanism and the handle, for explaining an angle adjustment of the handle. It should be noted that directions L, R, F and B shown in FIG. 7A to FIG. 7C and FIG. 8A to FIG. 8C correspond to directions L, R, F and B shown in FIG. 6, respectively.
[1] First, the length of the shoulder band (not shown) is adjusted as appropriate. Then, the shoulder band is placed over the operator's shoulder.
[2] Next, the tightening member 522 of the fixing mechanism 52 is loosened to release the fixation of the handle 51. Specifically, the upper part of the tightening member 522 is held and rotated to loosen the tightening member 522. Then, the position and the angle of the handle 51 are adjusted as appropriate. Specifically, as shown in FIG. 6, while the operator is holding the grips 512, the operator moves the grips 512 in any one of the direction L, the direction R, the direction F and the direction B to adjust the position and the angle of the handle 51. The direction L and the direction R are directions in which the grip 512 moves in the left-right direction along the axis 511a of the handle 51, while the direction F and the direction B are directions in which the grip 512 moves due to the rotation about the axis 511a of the handle 51.

Specifically, the direction L and the direction R are adjusted with reference to the positional relationship between the pointer P of the fixing mechanism 52 and the position marker MP of the handle 51. Furthermore, the direction F and the direction B are adjusted with reference to the positional relationship between the pointer P of the fixing mechanism 52 and the angle marker MA of the handle 51. Hereinafter, the details of the adjustment of the direction L and the direction R will be described first, and then the details of the adjustment of the direction F and the direction B will be described.

FIG. 7A to FIG. 7C show a state in which the handle 51 is being adjusted in the direction L or the direction R. The direction F and the direction B of the handle 51 are positioned in the center. In other words, the pointer P and the angle marker MA3 are positioned so as to overlap each other.

First, in FIG. 7A, the pointer P and the position marker MP1 are positioned so that they overlap each other by moving the handle 51 in the direction R relative to the fixing mechanism 52. By positioning the pointer P and the position marker MP1 so that they overlap each other, it can be understood that the handle 51 has been moved to the rightmost position relative to the fixing mechanism 52. Specifically, since the position marker MP1 is configured to indicate the right direction from the position of the position marker MP1 as the direction in which the handle 51 is displaceable, it can be understood that the state in FIG. 7A is a state in which the handle 51 has been moved to the rightmost position relative to the fixing mechanism 52.

Next, in FIG. 7B, the pointer P and the position marker MP3 are positioned so that they overlap each other by moving the handle 51 in the direction L relative to the fixing mechanism 52 from the state in FIG. 7A. That is, the pointer P and the standard marker MS are positioned so that they overlap each other. By positioning the pointer P and the standard marker MS (position marker MP3) so that they overlap each other, it can be understood that the handle 51 has been adjusted to a standard position relative to the fixing mechanism 52.

In FIG. 7C, the pointer P and the position marker MP5 are positioned so that they overlap each other by moving the handle 51 further in the direction L relative to the fixing mechanism 52 from the state in FIG. 7B. By positioning the pointer P and the position marker MP5 so that they overlap each other, it can be understood that the handle 51 has been moved to the leftmost position relative to the fixing mechanism 52. Specifically, since the position marker MP5 is configured to indicate the left direction from the position of the position marker MP5 as the direction in which the handle 51 is displaceable, it can be understood that the state in FIG. 7C is a state that the handle 51 has been moved to the leftmost position relative to the fixing mechanism 52. In the above explanation, an example was given of adjusting the direction L and the direction R with reference to the positional relationship between the pointer P of the fixing mechanism 52 and the position marker MP of the handle 51. However, the direction L and the direction R may also be adjusted with reference to the positional relationship between the side surface of the upper member 52a of the fixing mechanism 52 (more specifically, the left side surface near the shaft hole 521) and the position marker MP of the handle 51.

In this manner, the handle 51 can be adjusted in the direction L and the direction R. Next, the details of the adjustment of the direction F and the direction B will be described.

FIG. 8A to FIG. 8C show a state in which the handle 51 is being adjusted in the direction F or the direction B. The direction L and the direction R of the handle 51 are positioned in the center. That is, the pointer P and the position marker MP3 are positioned so that they overlap each other.

First, in FIG. 8A, the pointer P and the angle marker MA1 are positioned so that they overlap each other by moving the handle 51 in the direction B relative to the fixing mechanism 52. By positioning the pointer P and the angle marker MA1 so that they overlap each other, it can be understood that the handle 51 has been moved to the rearmost position relative to the fixing mechanism 52. In a case where the handle 51 is moved in the direction B beyond the angle marker MA1, there will be no angle marker MA overlapping with the pointer P. Accordingly, it can be understood that the state in FIG. 8A is a state in which the handle 51 has been moved to the rearmost position in the rotational direction relative to the fixing mechanism 52.

Next, in FIG. 8B, the pointer P and the angle marker MA3 are positioned so that they overlap each other by moving the handle 51 in the direction F relative to the fixing mechanism 52 from the state in FIG. 8A. That is, the pointer P and the standard marker MS are positioned so that they overlap each other. By positioning the pointer P and the standard marker MS (angle marker MA3) so that they overlap each other, it can be understood that the handle 51 has been adjusted to a standard position relative to the fixing mechanism 52.

And in FIG. 8C, the pointer P and the angle marker MA5 are positioned so that they overlap each other by moving the handle 51 further in the direction F relative to the fixing mechanism 52 from the state in FIG. 8B. By positioning the pointer P and the angle marker MA5 so that they overlap each other, it can be understood that the handle 51 has been moved to the frontmost position relative to the fixing mechanism 52. In a case where the handle 51 is moved in the direction F beyond the angle marker MA5, there will be no angle marker MA overlapping with the pointer P. Accordingly, it can be understood that the state in FIG. 8C is a state in which the handle 51 has been moved to the frontmost position in the rotational direction relative to the fixing mechanism 52.

In this manner, the handle 51 can be adjusted in the direction F and the direction B.

[3] Specifically, in a case where the operator does not know the preferred position and angle of the handle 51, first, the handle 51 is adjusted so that the pointer P and the standard marker MS overlap each other. That is, the handle 51 is adjusted to a standard position.

[4] Then, the tightening member 522 of the fixing mechanism 52 is tightened to fix the handle 51.

[5] Next, the position of the band attaching portion 53 in the front-rear direction and the circumferential direction is adjusted as appropriate so that the brush cutter 10 can be lifted at a position that is easy for working.

[6] Then, the brush cutter 10 is lifted up, and the posture operating the brush cutter 10 and the position of the handle 51 are confirmed.

[7] The position is readjusted as necessary. Specifically, the brush cutter 10 is placed back on the ground, and the position and the angle of the handle 51 and the position of the band attaching portion 53 in the front-rear direction and the circumferential direction are adjusted as appropriate. In this case, when adjusting the position and the angle of the handle 51, the handle 51 is adjusted in any of the directions of the handle 51, i.e., the direction L, the direction R, the direction F and the direction B, that is a desired direction to be adjusted which has been confirmed by lifting the brush cutter 10. In detail, the adjustment is made with reference to the positional relationship between the pointer P of the fixing mechanism 52 and the marker M of the handle 51. For example, as an adjustment in the direction R, the handle 51 is adjusted relative to the fixing mechanism 52 so that the pointer P and the position marker MP1 overlap each other. When the adjustment of the position and the angle of the handle 51 relative to the fixing mechanism 52 is completed, the handle is fixed by tightening the tightening member 522 of the fixing mechanism 52. In this manner, the handle 51 is adjusted to a position and an angle that are easy to use.

According to such an aspect, even in a case where the operator does not know the preferred position and angle of the handle 51, the handle 51 can be easily adjusted to a standard position and angle. In addition, the position and the angle of the handle 51 can be adjusted to a desired state in a short time based on the standard position and angle. In other words, it becomes possible to reduce the number of times the brush cutter 10 needs to be lifted and lowered, thereby reducing the burden on the operator. In particular, in the case of a large working machine 1, the weight of the machine is very heavy, and thus if the number of times the working machine 1 needs to be lifted and lowered can be reduced, the burden on the operator can be sufficiently reduced.

### 3. Method for retracting handle 51 and returning handle 51 to workable state again

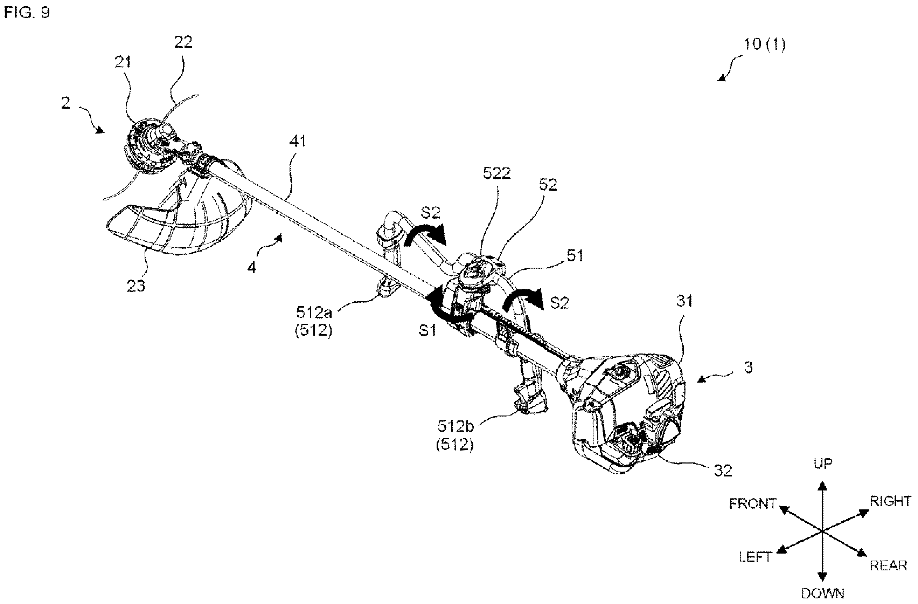

Next, a method for retracting the handle 51 and returning the handle 51 to a workable state again will be described with reference to other figures. FIG. 9 is a perspective view of the brush cutter with the handle retracted, as viewed from above. FIG. 9 shows a state where the handle 51 has been retracted compactly (in particular, in a state where the handle 51 is folded compactly in size in the up-down direction and the left-right direction) in order to house, transport the brush cutter 10, or the like. Note that the following description will be given taking as an example a case where the operator already knows the preferred position and angle of the handle 51.
[1] First, a method for changing a state of the brush cutter 10 from a state in which work can be performed as shown in FIG. 1 to a state in which the handle 51 is retracted as shown in FIG. 9 will be described.
[2] First, the tightening member 522 of the fixing mechanism 52 is loosened to release the fixation of the handle 51.
[3] Next, an operation S1 is performed to rotate the handle 51 and the fixing mechanism 52 to the right about the axis of the tightening member 522, when viewed from above. The angle of this right rotation is approximately 90°.
[4] Next, an operation S2 is performed to move the grips 512 of the handle 51 downward about the axis 521a (see FIG. 3) of the fixing mechanism 52.
[5] Then, the tightening member 522 of the fixing mechanism 52 is tightened to fix the handle 51.
   According to such an aspect, it is possible to easily retract the handle 51 of the brush cutter 10. As a result, the brush cutter 10 can be housed, transported, etc. without requiring much space.
[6] Next, a method for fixing the handle 51 from a state in which the handle 51 is retracted to a state in which the handle 51 can be worked with the brush cutter 10.
[7] First, the tightening member 522 of the fixing mechanism 52 is loosened to release the fixation of the handle 51 that is in the retracted position.
[8] Next, the grips 512 of the handle 51 are moved upward about the axis 521a (see FIG. 3) of the fixing mechanism 52. In other words, a reverse operation to the operation S2 is performed.
[9] Next, the handle 51 and the fixing mechanism 52 is rotated to the left about the axis of the tightening member 522, when viewed from above. In other words, a reverse operation to the operation S1 is performed. The angle of the left rotation is approximately 90°.
[10] Then, the positional relationship between the pointer P of the fixing mechanism 52 and the position marker MP of the handle 51 is adjusted so that the handle 51 matches with a desired position and angle. Specifically, for example, the position and the angle of the handle 51 are adjusted so that the pointer P and the standard marker MS overlap each other (see FIG. 7B).
   On the other hand, in the portable working machines disclosed in the aforementioned Japanese unexamined patent publication No. 2015-050985 and Japanese examined utility model application publication No. H01-32511, the preferred position and angle needs to be reproduced by lifting the portable working machine based on the working posture stored by the operator in order to adjust the handle to the preferred position and angle. That is, the portable working machine needs to be lifted in order to adjust the handle to the preferred position and angle. Furthermore, since the operator adjusts the handle to the preferred position and angle based on the working posture stored by the operator, it is difficult to reproduce the preferred state.
[11] Finally, the handle 51 is fixed by tightening the tightening member 522 of the fixing mechanism 52.

According to such an aspect, the marker M indicates the position and the angle of the handle 51 relative to the connecting portion 4, so that when the position or the angle of the handle 51 is changed in housing, transporting the brush cutter 10, or the like, the position and the angle of the handle 51 can be repeatedly returned to the original state. Furthermore, according to such an aspect, when the handle that has been moved from the desired position and angle is fixed to the desired position and angle again, the position and the angle can be easily reproduced in a short time. In addition, regarding the position and the angle of the handle 51, the operator can know the desired position and angle of the handle 51 in advance, and thus the brush cutter 10 does not need to be lifted in order to adjust the position and the angle of the handle 51, thereby reducing the burden on the operator. In particular, in the case of a large working machine 1, the weight of the working machine 1 is very heavy, and thus if the number of times the working machine 1 needs to be lifted and lowered can be reduced, the burden on the operator can be sufficiently reduced.

### [Others]

The brush cutter 10 according to one embodiment may be implemented in the following aspects.

In the embodiment described above, the example has been explained in which the pointer P is arranged on the left side of the fixing mechanism 52, and the marker M is arranged near the position of the pointer P in a state where the fixing mechanism 52 is attached to the extending portion 511. However, the present disclosure is not limited thereto. For example, the pointer P may be arranged to the right side of the fixing mechanism 52, and the marker M may be arranged near the position of the pointer P in a state where the fixing mechanism 52 is attached to the extending portion 511. Furthermore, the upper member 52a of the fixing mechanism 52 may have a through hole extending from the upper side to the lower side, and the positional relationship between the pointer P provided inside the through hole and the marker M may be understood.

In the embodiment described above, the example has been described in which the pointer P protrudes from the left side surface of the upper member 52a of the fixing mechanism 52 in the left direction. However, the present disclosure is not limited thereto. For example, the pointer P may be a sticker or the like that has no projections or recesses. Specifically, a slanted portion may be provided in the fixing mechanism 52, and a sticker may be attached to that portion as the pointer P.

Furthermore, the present disclosure may be provided in each of the following aspects.
(1) A working machine, comprising: a working portion; a main body portion; a connecting portion; and an operation portion, the working portion being connected to the main body portion via the connecting portion, the operation portion including a handle, and a fixing mechanism that fixes the handle to the connecting portion, and the handle including a marker that indicates a relative position and angle to the connecting portion.
   According to such an aspect, the marker indicates the position and the angle of the handle relative to the connecting portion, so that when the position or the angle of the handle is changed in housing, transporting the brush cutter, or the like, the position and the angle of the handle can be repeatedly returned to the original state.
(2) The working machine according to (1), wherein the marker includes a plurality of unit markers, and the plurality of unit markers is arranged at a predetermined interval.
   According to such an aspect, the position of the handle relative to the main body portion can be finely adjusted in accordance with the predetermined interval by arranging the plurality of unit markers at the predetermined interval. As a result, the position of the handle can be easily adjusted in an even shorter time.
(3) The working machine according to (1) or (2), wherein the handle is configured so that an axis thereof extends in a first direction that intersects with the connecting portion, the marker includes a position marker and an angle marker, the position marker is configured to indicate a position in the first direction relative to the connecting portion, and the angle marker is configured to indicate a position in a rotational direction about the axis relative to the connecting portion.
   According to such an aspect, the position and the angle of the handle can be indicated by each of the position markers and the angle markers. As a result, the position and the angle of the handle can be easily adjusted in a shorter time to a position and an angle that are easy to use the working machine.
(4) The working machine according to any one of (1) to (3), wherein the marker includes a standard marker, and the standard marker is configured to indicate a standard position of the handle relative to the main body portion.
   According to such an aspect, the standard position and angle of the handle can be visually recognized by the marker. As a result, the position and the angle of the handle can be adjusted to a position and an angle that are easy to use the working machine, based on the standard position.
(5) The working machine according to any one of (1) to (4), wherein the connecting portion is configured so that an axis thereof extends in a front-rear direction, and the handle is configured so that an axis thereof extends in a first direction that intersects with the front-rear direction, and when viewing from a rear side, the handle has the marker on a left side of the axis of the connecting portion.
   According to such an aspect, the position of the operator relative to the working machine when placing the working machine on the ground and adjusting the position and the angle of the handle, and the position of the operator relative to the working machine when lifting the working machine can be on the same side. As a result, after adjusting the position and the angle of the handle, the operator can lift the working machine without changing his/her position relative to the working machine, allowing the operator to start work smoothly.
(6) The working machine according to any one of (1) to (5), wherein the marker includes a plurality of unit markers, and at least some of the plurality of unit markers are configured to indicate a direction in which the handle is displaceable.
   According to such an aspect, the directions in which the handle is displaceable are indicated by the arrangement and the shape of the plurality of unit markers, making it possible to easily understand the adjustment direction or the adjustment width. As a result, the position of the handle can be easily adjusted in a shorter time.
(7) The working machine according to any one of (1) to (6), wherein the working machine is a brush cutter, a blower, an edger, a pruner, a cultivator, a sweeper, or a shaft hedge trimmer.
   According to such an aspect, work can be performed using a brush cutter, a blower, an edger, a pruner, a cultivator, a sweeper, or a shaft hedge trimmer in which the handle can be easily adjusted in a short time to a position and an angle that are easy to use.

Of course, the present disclosure is not limited thereto.

Finally, various embodiments of the present disclosure have been described, but these are presented as examples and are not intended to limit the scope of the invention. Novel embodiments can be implemented in various other forms, and various omissions, replacements, and modifications can be made within the scope of the spirit of the disclosure. The embodiments and its modifications are included in the scope and the spirit of the disclosure and are included in the scope of the disclosure described in claims and the equivalent scope thereof.

## Claims

1. A working machine, comprising:
a working portion; a main body portion; a connecting portion; and an operation portion,
the working portion being connected to the main body portion via the connecting portion,
the operation portion including a handle, and a fixing mechanism that fixes the handle to the connecting portion, and
the handle including a marker that indicates a relative position and angle to the connecting portion.

2. The working machine according to claim 1, wherein
the marker includes a plurality of unit markers, and
the plurality of unit markers is arranged at a predetermined interval.

3. The working machine according to claim 1 or 2, wherein
the handle is configured so that an axis thereof extends in a first direction that intersects with the connecting portion,
the marker includes a position marker and an angle marker,
the position marker is configured to indicate a position in the first direction relative to the connecting portion, and
the angle marker is configured to indicate a position in a rotational direction about the axis relative to the connecting portion.

4. The working machine according to any one of claims 1 to 3, wherein
the marker includes a standard marker, and
the standard marker is configured to indicate a standard position of the handle relative to the main body portion.

5. The working machine according to any one of claims 1 to 4, wherein
the connecting portion is configured so that an axis thereof extends in a front-rear direction, and
the handle is configured so that an axis thereof extends in a first direction that intersects with the front-rear direction, and when viewing from a rear side, the handle has the marker on a left side of the axis of the connecting portion.

6. The working machine according to any one of claims 1 to 5, wherein
the marker includes a plurality of unit markers, and
at least some of the plurality of unit markers are configured to indicate a direction in which the handle is displaceable.

7. The working machine according to any one of claims 1 to 6, wherein
the working machine is a brush cutter, a blower, an edger, a pruner, a cultivator, a sweeper, or a shaft hedge trimmer.
